# EUROPÄISCHE PATENTSCHRIFT

(11) **EP 0 671 374 B1**
(45) Veröffentlichungstag und Bekanntmachung des Hinweises auf die Patenterteilung: **17.12.1997**
(21) Anmeldenummer: 95100262.5
(22) Anmeldetag: 10.01.1995
(51) Int. Cl.: C05F 17/02, B65G 65/46

(54) **Kompostwendemaschine**
Compost turning machine
Appareil pour retourner le compost

(30) Priorität: 08.03.1994 DE 4407680
(43) Veröffentlichungstag der Anmeldung: 13.09.1995
(73) Patentinhaber: Heissenberger & Pretzler Ges.m.b.H., 8020 Graz (AT)
(72) Erfinder: Pretzler, Rudolf, Dipl.-Ing., A-8600 Bruck/Mur (AT); Heissenberger, Josef, Dipl.-Ing., A-8045 Graz (AT)
(74) Vertreter: Laufhütte, Dieter, Dr.-Ing.

(56) Entgegenhaltungen:
- EP-A- 0 346 642
- FR-A- 2 625 987
- US-A- 5 097 610
- US-A- 5 120 433

## Beschreibung

Die Erfindung betrifft eine Kompostwendemaschine mit einem lenkbaren Fahrwerk, einer an der Maschinenfrontseite vor jeder Laufspur des Fahrwerks angeordneten Räumeinrichtung und einer in einem Umsetztunnel angeordneten Umsetzwalze zum Durchmischen des beim Durchfahren aufgenommenen und hinter der Maschine wieder abgelegten Kompostgutes.

Eine derartige Kompostwendemaschine ist beispielsweise schon in der EP 0 346 642 B1 beschrieben. Diese gattungsgemäße Kompostwendemaschine ist derart ausgestaltet, daß sie sich während des Fahrens jeweils die eigene Fahrspur vor dem Fahrwerk freiräumt. Hierzu weist jede Räumeinrichtung ein sich in Fahrtrichtung seitlich vor dem Umsetztunnel erstreckendes Leitschild auf, das mit einem aktiv arbeitenden Räumwerkzeug ausgestattet ist. Das aktiv arbeitende Räumwerkzeug besteht aus einer mit einem Antriebsorgan gekoppelten, vor der Leitfläche der Räumeinrichtung rotierenden Scheibe, die mit grabenden Vorsprüngen versehen ist. Jeder Vorsprung ist als radial zur Scheibe verlaufende, aus der Scheibenebene vorstehende Leiste ausgebildet. Die Leisten sind als L-Profile ausgebildet, so daß sie bei Rotation der aktiv arbeitenden Räumwerkzeuge neben der schneidenden bzw. fräsenden Räumfunktion auch als Wurfelemente dienen. Derartige rotierende Werkzeuge haben den Nachteil, daß sie bei Überfüllung nach oben eine Transportumkehr bewirken. Das führt zu einem unerwünschten Herausschleudern des Materials in Fahrtrichtung. Weiter entsteht ein unnötiger Leistungsverlust durch den sogenannten "Mixer-Effekt".

Des weiteren ist aus der FR-A-2 625 987 bereits ein Gerät zur Umsetzung von Kompost bekannt, das motorbetriebene Schnecken als aktiv arbeitende Räumwerkzeuge aufweist. Dabei sind zwei Schnecken in dem Aufnahmebereich eines mit Klauen versehenen Förderbandes trichterförmig angeordnet, so daß im fahrenden Betrieb außerhalb des Förderbandes befindlicher Kompost zur Mitte des Förderbandes hin transportiert wird. Die beiden Schnecken werden jeweils durch einen Motor angetrieben, der jeweils an einem förderbandseitigen Ende einer Schnecke angeordnet ist. Diese Motoranordnung hat allerdings den Nachteil, daß zum Förderband hin transportiertes Kompostmaterial zu stauen beginnt, sobald dieses in den Bereich des zwischen Förderband und Schnecke angeordneten Motorgehäuses gelangt.

Aus der US-A-5 120 433 ist ein weiteres Gerät zur Umsetzung von Kompost bekannt, das gegenüber der FR-A-2 625 987 trichterförmig angeordnete Leitbleche im Aufnahmebereich des Förderbandes aufweist. An den Innenseiten der Leitbleche sind jeweils Schnecken vorgesehen, die das Kompostmaterial zur Mitte des Förderbandes hin transportieren. Die Achse jeweils einer Schnecke ist durch einen Durchbruch an die Außenseite eines Leitbleches herausgeführt und wird außenseitig des Leitblechs von einem Motor angetrieben. Auch bei diesem Gerät tritt an dem Übergang zwischen Schnecke und Durchbruch ein unerwünschter Materialstau auf.

Aufgabe der Erfindung ist es daher, eine gattungsgemäße Kompostwendemaschine derart weiterzubilden, daß die Funktionsweise der aktiv arbeitenden Räumwerkzeuge verbessert wird.

Erfindungsgemäß wird diese Aufgabe ausgehend von einer gattungsgemäßen Kompostwendemaschine durch die Merkmale des kennzeichnenden Teils des Anspruchs 1 gelöst. Demnach ist das aktiv arbeitende Räumwerkzeug durch eine motorgetriebene Schnecke gebildet, die längs entlang des Leitschildes verläuft und die am zum Umsetztunnel hinweisenden Ende offen ist, wodurch ein Materialstau des zu transportierenden Kompostierungsgutes verhindert wird. Hierdurch kann der spurdeckende Dammrand einer Kompostmiete - oder eines anderen Materials, beispielsweise Erde - durch die Leit- bzw. Räumeinrichtung in verbessertem Maße in den Umsetztunnel der Kompostwendemaschine transportiert werden, um dort von der Umsetzwalze aufgenommen werden zu können.

Vorzugsweise wird das Kompostgut durch die halboffen ausgeführte Schnecke schräg zur Fahrtrichtung transportiert und durch den Transport mittels der halboffenen Schnecke entlang des Leitschildes wird durch die eindeutig aufgeprägte Längsbewegung das Material gezielt zur Umsetzwalze transportiert.

Vorteilhafte Ausgestaltungen der Erfindung ergeben sich aus den sich an den Hauptanspruch anschließenden Unteransprüchen.

Demnach kann die Schnecke des in Fahrtrichtung gesehen vorderen Bereichs des Räumwerkzeugs durch einen Hydromotor angetrieben werden. Die Schnecke kann über ein durch das Schneckenrohr verlaufendes, leitschildfestes Lagerrohr gelagert sein.

Die Antriebswelle für die Schnecke kann von der dem Hydromotor gegenüberliegenden Lagerstelle durch das Lagerrohr zum Hydromotor geführt werden. Die Drehrichtung der Schnecke ist so gewählt, daß in dem Teil, in welchem sie nicht abgedeckt ist, eine Bewegung von unten nach oben erfolgt, um eine Anhebung des Kompostierungsgutes zu erreichen. Im oberen Bereich der Schnecke, also in dem Bereich, der vom zu überfahrenden Boden weg weist, kann eine Verschleißschiene montiert sein, welche verschiebbar und exakt zur Schnecke hin einstellbar sein kann. Das Leitschild selbst kann auf einer austauschbaren Verschleißschiene aufliegen.

Die mit den Förderschnecken ausgestatteten Leitschilder können so hydraulisch nach innen verschwenkbar sein, daß beim Schließen der Schilde die Umsetzwalze vollständig abgedeckt ist und dadurch das Material am Mietenende nicht nach vorne hinausgeschleudert werden kann.

Die Leitschilde können höhenverstellbar gelagert sein, um so eine Anpassung der Leitschilde an Bodenunebenheiten zu gewährleisten. Hierzu kann vorteilhaft die Einstellung über ihr Eigengewicht erfolgen.

Weitere Einzelheiten und Vorteile der Erfindung werden anhand eines in der Zeichnung dargestellten Ausführungsbeispiels näher erläutert. Es zeigen:
- Fig. 1:: eine Draufsicht auf eine Ausführungsform der erfindungsgemäßen Kompostwendemaschine,
- Fig. 2:: eine Vorderansicht der erfindungsgemäßen Kompostwendemaschine und
- Fig. 3-5:: eine Detailansicht eines Teils der in den Figuren 1 und 2 dargestellten Kompostwendemaschine in verschiedenen Ansichten.

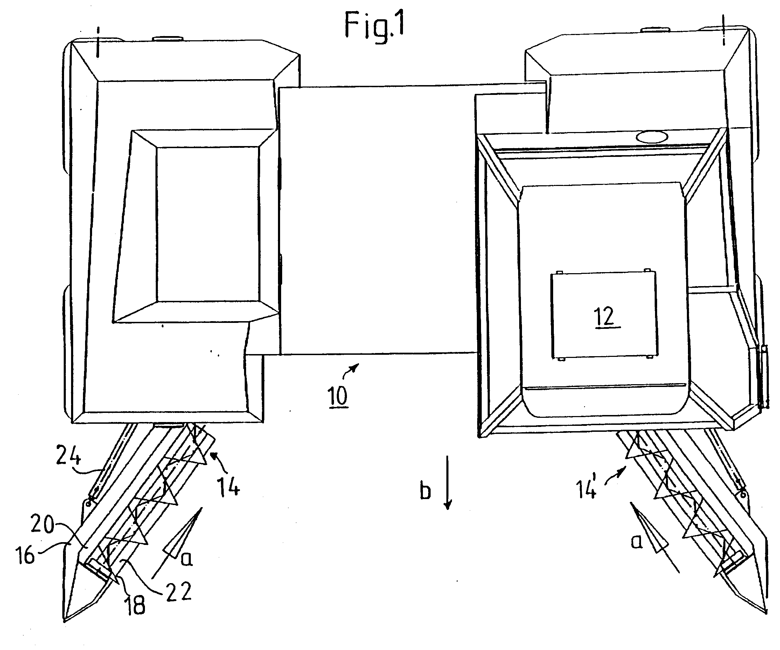

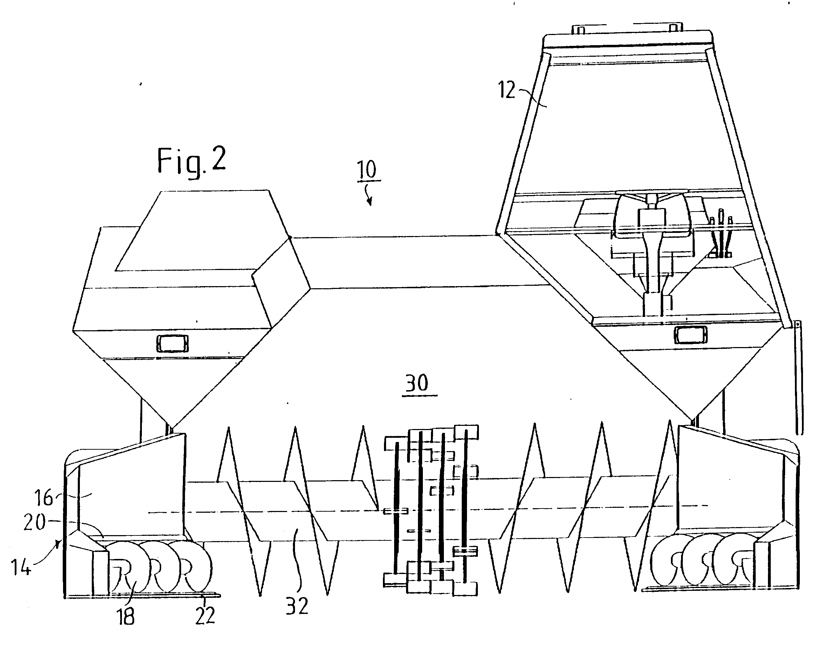

In den Figuren 1 und 2 ist eine Kompostwendemaschine 10 dargestellt, die über ein in den Figuren als solches nicht sichtbares lenkbares Fahrwerk verfahrbar ist. Zwischen den beiden Fahrwerken ist, wie bei Kompostwendemaschinen üblich, ein Umsetztunnel 30 angeordnet, indem quer zur Fahrtrichtung (Pfeilrichtung b in Figur 1) eine als solche ebenfalls bekannte Umsetzwalze 32 drehbar gelagert ist. Über diese Umsetzwalze wird das Material der Kompostmiete erfaßt und nach oben und hinten geschleudert, so daß es hinter der Kompostwendemaschine wieder abelegt wird.

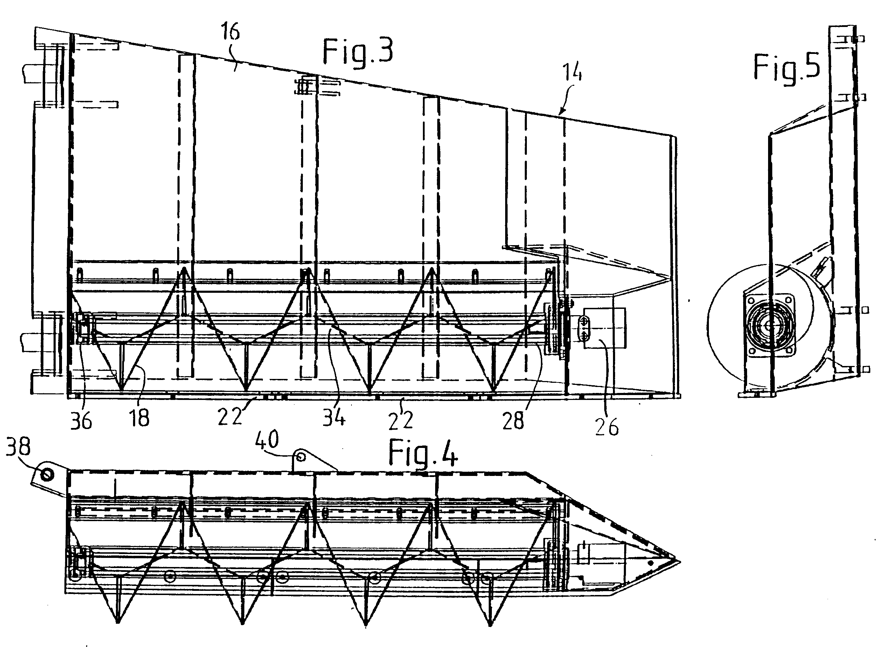

Wie in den Figuren 1 und 2 dargestellt, ist an der Maschinenfrontseite der Kompostwendemaschine auf beiden Seiten vor jeder Laufspur des Fahrwerks eine Räumeinrichtung 14 bzw. 14' angeordnet. Diese Räumeinrichtung dient dazu, den spurdeckenden Dammrand einer Kompostmiete zu beseitigen. Die Räumeinrichtungen 14 und 14' sind schwenkbar an der Maschinenfrontseite der Kompostwendemaschine 10 angelenkt, wobei sie über entsprechende Lenker 24 verschwenkt werden können. In den Figuren 1 und 2 sind die Räumeinrichtungen 14 und 14' in Arbeitsposition ausgerichtet, d. h. sie verlaufen in Fahrtrichtung (Pfeilrichtung b) schräg nach außen, wobei sie ca. in der Mitte der Vorderfront der das Fahrwerk überdeckenden Karosserieteile angelenkt sind. Der Aufbau der Räumeinrichtung 14 bzw. 14' wird im folgenden nur unter Bezugnahme der Räumeinrichtung 14 erläutert, da beide Räumeinrichtungen aus identischen Teilen bestehen, die nur jeweils spiegelverkehrt (wie aus Figur 1 und 2 zu ersehen) angeordnet sind. Zum Aufbau der Räumeinrichtung ist auch auf die Figuren 3 bis 5, die diese Räumeinrichtung 14 im Detail zeigen, zu verweisen.

Die Räumeinrichtung 14 weist zunächst ein Leitschild 16 auf, in dem eine motorgetriebene Schnecke 18 gelagert ist. Das Leitschild 16 ist um Ösen 38 schwenkbar an der Maschinenfrontseite der Kompostwendemaschine 10 gelagert. Der Lenker 24 ist an eine Lasche 40 des Leitschildes 16 angelenkt. Unterhalb des Leitschildes 16 in Richtung auf den zu überfahrenden Boden hin ist eine Verschleißschiene 22 austauschbar mit dem Leitschild 16 verbunden. Oberhalb der Schnecke 18 ist eine einstellbare, d. h. verschiebbar einstellbare Verschleißschiene 20 angeordnet. Hieraus ergibt sich, daß die längs des Leitschildes 16 verlaufende Schnecke 18 teilweise von der Verschleißschiene 22, dem Leitschild 16 und der anstellbaren Verschleißschiene 20 umschlossen ist. An ihrem nicht umschlossenen Teil, der beispielsweise aus der Figur 2 deutlich ersichtlich ist, bewegt sich die Schnecke derart, daß das auf dem Boden liegende Kompostgut vom Boden abgehoben wird. Am freien Ende des Leitschildes 16 ist in einem entsprechenden Gehäuse ein Hydromotor zum Antrieb der Schnecke 18 angeordnet. Diesbezüglich wird auf die Darstellung gemäß der Figuren 3 bis 5 verwiesen. Aus diesen ist auch ersichtlich, daß die Lagerung der Schnecke 18 über ein durch das Schneckenrohr verlaufendes, am Leitschild 16 befestigtes Lagerrohr 28 erfolgt, wobei das zum Umsetztunnel 30 hinweisende Ende der Schnecke 18 zum Vermeiden jeglichen Materialstaus offen ist. Von einer Lagerstelle 36 der Schnecke am zum Umsetztunnel 30 hinweisenden Ende bis zum freien Ende des Leitschildes 16, an dem der Hydromotor 26 angeordnet ist, verläuft durch das Schneckenlagerrohr 28 eine Antriebswelle 34 für die Schnecke.

Die Räumeinrichtungen 14 und 14' fördern das von der Schnecke 18 erfaßte Kompostgut in Pfeilrichtung a gemäß Figur 1. Die Räumeinrichtungen 14 und 14' sind derart verschwenkbar, daß sie von der aufgeschwenkten, in Fahrtrichtung schräg nach vorne wegstehenden Stellung (wie in den Figuren 1 und 2 dargestellt) derart eingeklappt werden können, daß die Umsetzwalze 32 in Fahrtrichtung nach vorne vollständig abgedeckt ist. Dadurch kann beispielsweise verhindert werden, daß Material am Mietenende nach vorne geschleudert wird.

## Patentansprüche

1. Kompostwendemaschine (10) mit einem lenkbaren Fahrwerk, einer an der Maschinenfrontseite vor jeder Laufspur des Fahrwerks angeordneten Räumeinrichtung (14, 14') und einer in einem Umsetztunnel (30) angeordneten Umsetzwalze (32) zum Durchmischen des beim Durchfahren aufgenommenen und hinter der Maschine wieder abgelegten Kompostgutes, wobei jede Räumeinrichtung (14, 14') ein sich in Fahrtrichtung (b) seitlich vor dem Umsetztunnel (30) erstreckendes Leitschild (16) aufweist, das mit einem aktiv arbeitenden Räumwerkzeug ausgestattet ist,
**dadurch gekennzeichnet**,
daß das aktiv arbeitende Räumwerkzeug eine motorgetriebene Schnecke (18) ist, die längs entlang des jeweiligen Leitschildes (16) verläuft und
daß die Schnecke durch einen Motor (26) angetrieben ist, der am freien Ende des Leitschildes (16) angeordnet ist.

2. Kompostwendemaschine nach Anspruch 1, dadurch gekennzeichnet, daß die Lagerung der Schnecke über ein durch das Schneckenrohr verlaufendes, am Leitschild befestigtes Lagerrohr (28) erfolgt, wobei das zum Umsetztunnel (30) hinweisende Ende der Schnecke (18) zum Vermeiden jeglichen Materialstaus offen ist.

3. Kompostwendemaschine nach einem der vorangehenden Ansprüche, dadurch gekennzeichnet, daß von der Lagerstelle (36) der Schnecke (18) am zum Umsetztunnel (30) hinweisenden Ende bis zum freien Ende des Leitschildes, an dem ein Hydromotor angeordnet ist, durch das Lagerrohr (28) eine Antriebswelle (34) für die Schnecke (18) verläuft.

4. Kompostwendemaschine nach einem der vorangehenden Ansprüche, dadurch gekennzeichnet, daß am Leitschild (16) auf der dem zu überfahrenden Boden gegenüberliegenden Seite der Schnecke (18) eine einstellbare Verschleißschiene (20) angeordnet ist.

5. Kompostwendemaschine nach einem der vorangehenden Ansprüche, dadurch gekennzeichnet, daß unterhalb des Leitschildes (16) in Richtung auf den zu überfahrenden Boden hin eine Verschleißschiene (22) austauschbar angeordnet ist.

6. Kompostwendemaschine nach einem der vorangehenden Ansprüche, dadurch gekennzeichnet, daß die mit den Schnecken (18) ausgestatteten Leitschilde (16) an der in Fahrtrichtung (b) nach vorne gerichteten Front der Kompostwendemaschine derart schwenkbar angelenkt sind, daß sie von der aufgeschwenkten in Fahrtrichtung schräg nach vorne wegstehenden Stellung derart einklappbar sind, daß die Umsetzwalze (32) in Fahrtrichtung nach vorne vollständig abgedeckt ist.

7. Kompostwendemaschine nach einem der vorangehenden Ansprüche, dadurch gekennzeichnet, daß die Schnecken (18) der Räumwerkzeuge derart drehbar antreibbar sind, daß sie auf der vom Leitschild (16) wegweisenden Seite eine Bewegung vom Boden aus nach oben durchführen, um das zu transportierende Kompostgut vom Boden abzuheben.

## Claims

1. A compost turning machine (10) with a steerable undercarriage, a clearing device (14, 14') arranged at the front of the machine ahead of each running track of the undercarriage, and a turn-over roller (32) arranged in a turn-over tunnel (30), for mixing the compost stock taken up during the run through and deposited again behind the machine, wherein each clearing device (14, 14') has a guide plate (16) extending laterally in the direction of travel (b) ahead of the turn-over tunnel (30), which guide plate is provided with an actively operating clearing tool,
**characterized in that**
the actively operating clearing tool is a motor-driven screw (18) which extends along the respective guide plate (16), and
that the screw is driven by a motor (26) which is arranged at the free end of the guide plate (16).

2. A compost turning machine according to claim 1, characterized in that the mounting of the screw is effected by means of a mounting tube (28) extending through the tube of the screw and secured on the guide pate, in which arrangement, the end of the screw (18) pointing towards the turn-over tunnel (30) is open to avoid any blockage of the material.

3. A compost turning machine according to one of the preceding claims, characterized in that a drive shaft (34) for the screw (18) extends through the mounting tube (28), from the mounting point (36) of the screw at the end pointing towards the turn-over tunnel (30) as far as the free end of the guide plate whereon there is arranged a hydraulic motor.

4. A compost turning machine according to one of the preceding claims, characterized in that on the guide plate (16), on the side of the screw (18) on the opposite side to the ground to be travelled over, there is arranged an adjustable rail (20) subject to wear.

5. A compost turning machine according to one of the preceding claims, characterized in that an exhangeable rail (22) subject to wear is arranged beneath the guide plate (16) in the direction towards the ground to be travelled over.

6. A compost turning machine according to one of the preceding claims, characterized in that the guide plates (16) provided with the screws (18) are articulated at the front of the compost turning machine directed forward in the direction of travel (b), for pivoting in such a way that they they can be folded in from their swung-open position projecting obliquely forward in the direction travel, in such a way that the turn-over roller (32) is completely covered in the direction of travel towards the front.

7. A compost turning machine according to one of the preceding claims, characterized in that the screws (18) of the clearance tools can be driven in rotation in such a way that on the side pointing away from the guide plate (16), they execute a movement from the ground upwards, so as to lift the compost stock to be conveyed off the ground.

## Revendications

1. Machine (10) pour retourner le compost avec un mécanisme de roulement apte à être guidé, un dispositif de déblayage (14, 14') disposé au côté frontal de la machine devant chaque voie de roulement du mécanisme de roulement et un rouleau de déplacement (32) disposé dans un tunnel de déplacement (30) pour mélanger le compost récupéré lors du passage et déposé de nouveau derrière la machine, chaque dispositif de déblayage (14, 14') présentant une lame de guidage (16) s'étendant dans le sens de la marche (b) sur le côté devant le tunnel de déplacement (30) et qui est équipé d'un outil de déblayage actif, caractérisée en ce que l'outil de déblayage actif est une vis (18) entraînée par moteur qui s'étend le long de la lame de guidage respective (16) et en ce que la vis est entraînée par un moteur (26) qui est disposé à l'extrémité libre de la lame de guidage (16).

2. Machine pour retourner le compost selon la revendication 1, caractérisée en ce que le logement de la vis a lieu par un tube de logement (28) s'étendant à travers le tube hélicoïdal, fixé à la lame de guidage, l'extrémité de la vis (18) orientée vers le tunnel de déplacement (30) étant ouverte pour éviter toute accumulation de matière.

3. Machine pour retourner le compost selon l'une des revendications précédentes, caractérisée en ce qu'un arbre d'entraînement (34) pour la vis (18) s'étend à travers le tube de logement (28), depuis l'emplacement de logement (36) de la vis (18) à l'extrémité orientée vers le tunnel de déplacement (30) jusqu'à l'extrémité libre de la lame de guidage à laquelle est disposé un moteur hydraulique.

4. Machine pour retourner le compost selon l'une des revendications précédentes, caractérisée en ce qu'il est disposé à la lame de guidage (16) au côté de la vis (18) opposé au sol sur lequel il faut passer un rail d'usure ajustable (20).

5. Machine pour retourner le compost selon l'une des revendications précédentes, caractérisée en ce qu'un rail d'usure (22) est disposé de manière échangeable en dessous de la lame de guidage (16) en direction vers le sol sur lequel il faut passer.

6. Machine pour retourner le compost selon l'une des revendications précédentes, caractérisée en ce que les lames de guidage (16) équipées de vis (18) sont articulées de manière pivotante au front orienté dans le sens de la marche (b) vers l'avant de la machine pour retourner le compost de façon qu'elles puissent être repliées à partir de la position de pivotement en saillie oblique vers l'avant dans le sens de la marche de telle sorte que le rouleau de déplacement (32) est complètement recouvert dans le sens de la marche vers l'avant.

7. Machine pour retourner le compost selon l'une des revendications précédentes, caractérisée en ce que les vis (18) des outils de déblayage peuvent être entraînées de façon à exécuter au côté éloigné de la lame de guidage (16) un mouvement depuis le sol vers le haut pour relever le compost à transporter du sol.
